# EUROPEAN PATENT APPLICATION

(11) **EP 1 345 357 A1**
(43) Date of publication of application: **17.09.2003**
(21) Application number: 02290612.7
(22) Date of filing: 12.03.2002
(51) Int. Cl.: H04L 12/28, H04L 29/08, G06F 9/46, G06F 17/30, H04L 12/24

(54) **Communication method between an http server and a client**

(71) Applicant: Thomson Licensing S.A., 92100 Boulogne-Billancourt (FR)
(72) Inventor: Mischler, Denis, 35235 Thorigne Fouillard (FR); Crocitti, Valérie, 35230 Saint Armel (FR); Delaunay, Christophe, 35700 Rennes (FR)
(74) Representative: Kohrs, Martin

(57) **Abstract**

The invention concerns a method for communication between a HAVi client and an http server, both connected to a HAVi network, characterized by the steps of:
- by the HAVi client, registering with its local event manager for notification of an event comprising information of an update of a data object of the http server;
- by the http server, sending said event on the HAVi network when the update occurs;
- by the HAVI client, receiving said event and requesting transmission of the updated data object by the http server.

## Description

The invention concerns a communication method between a http server and a client, in particular in the case when the client is a HAVi compliant device. The invention can be applied for example in the field of home networks.

A home network may be composed of several sub-networks using different technologies. For example, a Home Audio Video interoperability (HAVi) compliant network can be connected to an Ethernet compliant network. HAVi devices can have access to the Internet through this Ethernet network. A HAVi device could use a web browser to connect with an HTML application through a HAVi web proxy, or an HTTP-based server application gateway.

The problem to be solved is to update on the HAVi client side the HTML data built by the application of the HTTP server.

In a simple Internet Protocol network, protocols such as Remote Method Invocation (RMI) can be used to force ('push') data to a client application. No such mechanism is provided in HAVi.

The invention concerns a method for communication between a HAVi client and an http server, both connected to a HAVi network, characterized by the steps of:
- by the HAVi client, registering with its local event manager for notification of an event comprising information of an update of a data object of the http server;
- by the http server, sending said event on the HAVi network when the update occurs;
- by the HAVi client, receiving said event and requesting transmission of the updated data object by the http server.

The invention benefits from the fact that the http server is connected to the HAVi network in order to make use of the HAVi event notification mechanism to trigger a data pull by the HAVi client. The term 'connected' comprises a direct connection of the http server to the HAVi network, as well as a connection through a mechanism such as OSGi. In the first case, an application of the http server triggers the event transmission, while in the second case, it is an application of the OSGi mechanism.

Other characteristics and advantages will be described in a non-restrictive embodiment of the invention. The embodiment will be described using the enclosed figures, among which:
- figure 1 is a diagram of a HAVi network linked to the Internet through a HAVi web proxy;
- figure 2 is a diagram of a network in which the web proxy mechanism of figure 1 is encapsulated in an OSGi gateway;
- figure 3 is a timeline of the actions performed by a HAVi client of figure 2 and the OSGi gateway for updating a HTML page at the level of the client, according to the present embodiment.

The present embodiment is based on the Home Audio Video interoperability (HAVi) specification, maintained by HAVi, Inc. 2694 Bishop Drive, Suite 275 San Ramon, CA 94583, USA, as well as on the Open Services Gateway initiative (OSGi) for which more information is available from OSGi, Bishop Ranch 2 2694 Bishop Drive, Suite 275 San Ramon, CA 94583 USA.

HAVi defines an architecture for facilitating interoperability and development of distributed applications on home networks. It is intended for implementation on consumer electronics devices and computing devices. OSGi on the other hand focuses on the delivery of services to networks, such as a HAVi network. The OSGi Framework and Specifications facilitate the installation and operation of multiple services on a single Open Services Gateway (set-top box, cable or DSL modem, PC, Web phone, automotive, multimedia gateway or dedicated residential gateway).

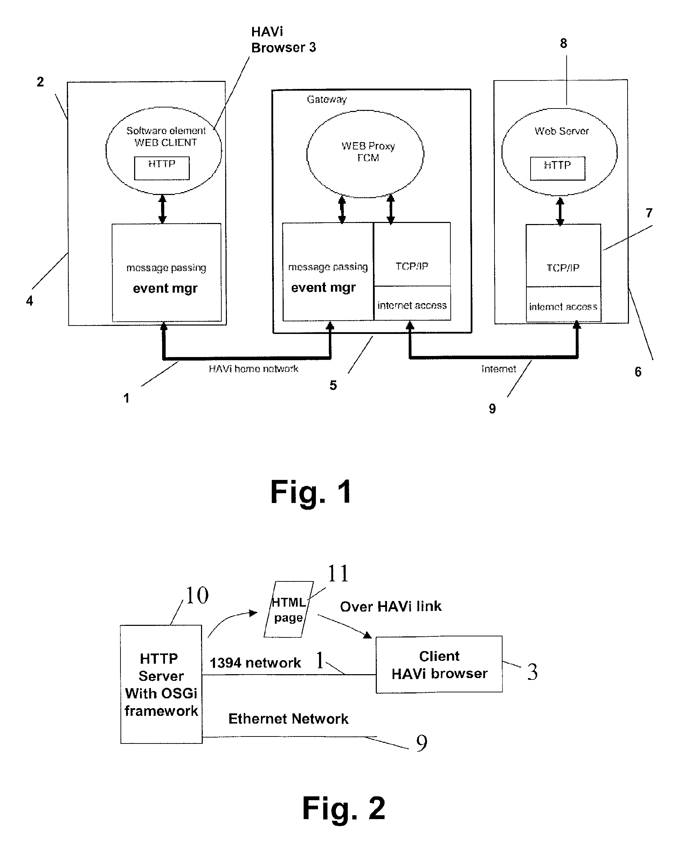

Figure 1 is a block diagram of a HAVi network 1 connected to the internet network 9. The HAVi network comprises a client device 2, which hosts a software element WEB client 3. WEB client 3 is an HTTP browser according to the present embodiment. The device 2 also contains the HAVi messaging system 4, which the local software elements can call. The internet network comprises communication protocols and a physical layer (TCP/IP protocols and interface 7), as well as a WEB server 8. The two networks are linked by a gateway 5 hosting a WEB proxy FCM as defined by HAVi, as well as the HAVI protocols on the HAVI side and the internet protocols on the internet side.

This architecture allows encapsulation of http messages in HAVi messages.

Figure 2 illustrates the OSGi approach, where the mechanism of figure 1 of figure 1 is encapsulated in an OSGi gateway 10. This gateway provides the link to the internet network and offers a global application to control the devices of the different sub-networks of the home.

According to the present embodiment, this global application is an HTTP/HTML application, accessible to the HAVI device through the HAVi browser. The OSGi application maintains pages representing the status of the Ethernet and IEEE 1394 (HAVi) networks and of the devices connected to these sub-networks. The OSGi application is informed of changes on the sub-networks through the protocols running on these sub-networks. When the OSGi application updates the HTML pages, transmission of the updated pages is carried out as follows:

For the Ethernet network, a remote method invocation is performed to push the data to a client.

For the HAVi network, the mechanism used the HAVI event manager to notify a HAVi client that a data update is required. In response to the notification, the HAVi client then requests the data from the OSGi application. In other words, it becomes the client's responsibility to pull the updated HTML data from the OSGi server.

This mechanism will now be described in more detail. Every HAVi device comprises a mandatory software element called 'Event Manager'. Another software element of the device can register with the local Event Manager, specifying the events it would like to be notified. The Even Manager of a device has the following tasks: when an event is generated locally by its device, it transmits this event over the network, and when it receives an event from the network, it must notify all local software elements who registered with the Event Manager for notification of this event.

The services provided by the Event Manager are described in section 5.4 of the HAVi specification version 1.1. An event comprises an event identifier and an event body. Three types of events are defined: system specific events, vendor specific events and application specific events. The latter can be generated by a specific software element to inform other devices or software elements of internal changes. This event type is used in the present embodiment.

The event identifier indicates the type of the event, and the identity of the application that generated it.

According to the present embodiment, an event called "Web Page Update" is defined. The OSGi application (which is a HAVi application module) or the HAVI WEB proxy running on the OSGi server use this event to inform a client application that an HTML page has been refreshed. An identifier of the HTML page is included with the event. In the present case, the event identifier is chosen so as to unambiguously indicate the web page update. The event body contains the address of the web page itself.

The web browser 3 of the HAVi client (which is also a HAVI application module) will subscribe to its local Event Manager for the event having the identifier corresponding to the HTML page update. All HAVi components having done so with their local Event Manager will then be notified concurrently. Upon notification, these components can then send a message to the OSGi server, requesting transmission of the page identified by the address given in the event body.

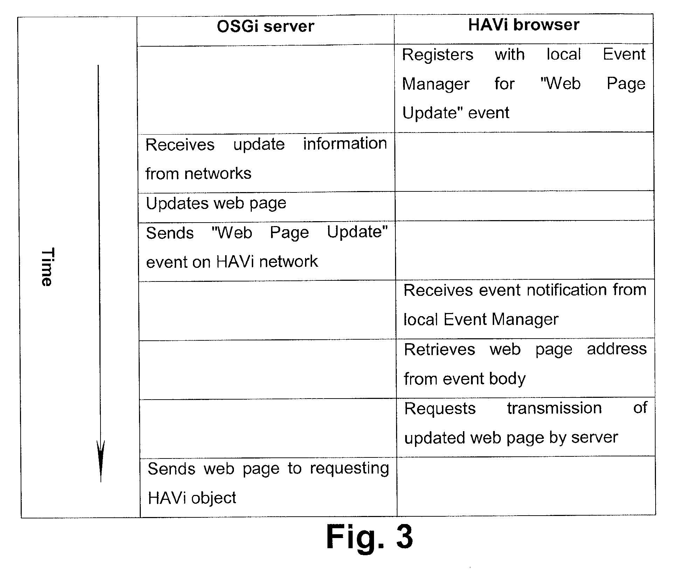

Figure 3 is a diagram of the process that has just been described.

Although the embodiment concerns HAVi and OSGi, the principle of the invention can be applied in other environments where a data push is not directly possible and where a data server needs to force a client to retrieve updated data.

## Claims

1. Method for communication between a HAVi client and an http server, both connected to a HAVi network, **characterized by** the steps of:
- by the HAVi client, registering with its local event manager for notification of an event comprising information of an update of a data object of the http server;
- by the http server, sending said event on the HAVi network when the update occurs;
- by the HAVI client, receiving said event and requesting transmission of the updated data object by the http server.

2. Method according to claim 1, wherein the event transmitted by the http server contains an identifier of the updated data object.

3. Method according to claim 2, wherein the data object is an HTML page and the identifier is the HTML page address.
